# EUROPÄISCHE PATENTSCHRIFT

(11) **EP 2 255 324 B1**
(45) Veröffentlichungstag und Bekanntmachung des Hinweises auf die Patenterteilung: **29.07.2015**
(21) Anmeldenummer: 09719191.0
(22) Anmeldetag: 13.03.2009
(51) Int. Cl.: G06K 19/073, G06K 7/00, G06K 7/10

(54) **OPTIMIERTE BEFEHLSVERARBEITUNG IM RAHMEN DER CHIPKARTEN-KOMMUNIKATION**
OPTIMIZED COMMAND PROCESSING WITHIN THE CONTEXT OF CHIP CARD COMMUNICATION
ÉXÉCUTION OPTIMISÉE D'UNE INSTRUCTION DANS LE CADRE DE LA COMMUNICATION AVEC UNE CARTE À PUCE

(30) Priorität: 14.03.2008 DE 102008014037
(43) Veröffentlichungstag der Anmeldung: 01.12.2010
(73) Patentinhaber: Giesecke & Devrient GmbH, 81677 München (DE)
(72) Erfinder: HOLLY, Ralf, 85748 Garching (DE); LUTZ, Katrin, 85757 Karlsfeld (DE)
(86) Internationale Anmeldenummer: PCT/EP2009/001855
(87) Internationale Veröffentlichungsnummer: WO 2009/112279

(56) Entgegenhaltungen:
- DE-A1- 19 626 339
- DE-A1- 19 648 912
- DE-A1-102005 056 865
- US-A- 5 942 738

## Beschreibung

Die Erfindung liegt auf dem Gebiet der Chipkartentechnologie, insbesondere der Mobilfunktechnik und bezieht sich auf die Verarbeitung von Befehlen, die zwischen einer Chipkarte (SIM-Karte) und einer Kartenleseeinrichtung (einem Endgerät, wie z. B. einer mobilen Station oder dergleichen) ausgetauscht werden. Die Erfindung betrifft insbesondere ein Verfahren, einen mobilen Datenträger, ein System, ein computerlesbares Medium, ein Computerprogrammprodukt zum Bearbeiten eines Befehls, der über ein standardisiertes Protokoll, insbesondere nach dem ISO/IEC7816-Standard von einem Kartenleser an den mobilen Datenträger übertragen wird.

Für den Datenaustausch zwischen der Chipkarte und einer Kartenleseeinrichtung wird ein festes Kommunikationsschema verwendet. Dieses Kommunikationsschema basiert auf einem so genannten Master-Slave-Modell, bei dem das Terminal der Master ist und zum Absetzen von Befehlen bestimmt ist und bei dem die Karte als Slave agiert und zur Bearbeitung der Befehle und zum Rücksenden von Antworten auf diese Befehle bestimmt ist. Dabei gehen grundsätzlich alle Aktionen vom Terminal aus. Die Karte reagiert nur - als Slave - auf die Befehle des Terminals und verarbeitet diese.

Für die Kommunikation zwischen Chipkarte und Kartenleser gibt es mehrere Normen. So ist insbesondere die Norm ISO 7816-3 für elektrische Eigenschaften der Kontakte und Kommunikationsprotokolle zuständig, während die Norm ISO 7816-4 Kommunikationsinhalte, Datenstruktur der Chipkarte, Sicherheitsarchitektur, Zugriffsmechanismen und dergleichen regelt. Darüber hinaus kommen unterschiedliche Datenübertragungsprotokolle zum Einsatz. Die üblichsten Protokolle sind hier das T=0-Protokoll, das T=1-Protokoll (sowie das T=14-Protokoll, das insbesondere in Deutschland verwendet wird), wobei das T=0- und das T=1-Protokoll in der ISO-Norm 7816-3 geregelt sind. Bei dem T=0-Protokoll handelt es sich um ein byte-orientiertes, asynchrones Protokoll, während das T=1-Protokoll block-orientiert ist. Speziell für das Gebiet der Mobilfunktechnik und für den Datenaustausch zwischen SIM-Karte und mobilem Gerät (ME, mobile Equipment) gilt der Standard GSM11.11 (der nach neuerer Nomenklatur ETS 300608 entspricht) bzw. der 3 GPP-TS 51.011-Standard, der Schnittstellen und logische Strukturen regelt.

Die Kommunikation zwischen der Chipkarte und dem Terminal erfolgt über Befehls- und Antworteinheiten. Diese Einheiten sind Datenpakete, die gemäß einem vordefinierten Format strukturiert sind. Je nachdem, welche Schicht eines OSI/ISO-Schichtenmodells betroffen ist, sind diese Einheiten APDU's (Application Protocol Data Unit) oder TPDU's (Transmission Protocol Data Unit), wenn die Leitungsschicht betroffen ist. Das Format und die Standards für die APDU's sind in der ISO (International Organization for Standardization) Norm 7816-4 definiert.

Der Datenaustausch zwischen der Chipkarte und dem Terminal umfasst Befehle und Antworten auf diese Befehle, wobei ein Befehl stets von dem Terminal durch Ausgabe einer Befehlsnachricht angestoßen wird. Dieser Befehl bzw. dieses Kommando wird in einer so genannten Befehls-APDU (Command APDU, C-APDU) von dem Terminal an die Chipkarte übertragen. Die Chipkarte arbeitet den Befehl ab und sendet eine Antwort in Form einer Antwort-APDU (Response APDU, R-APDU) an das Terminal. Eine bestimmte Antwort-APDU ist also immer auf eine bestimmte Befehls-APDU bezogen. Dieser Bezug wird auch als Befehl-Antwort-Paar bezeichnet. In einem solchen Befehl-Antwort-Paar können die Befehlsnachricht und die Antwortnachricht Daten umfassen.

Je nach zugrundeliegendem Standard bzw. Übertragungsprotokoll ist eine Klasse von Befehlen vorgesehen, die solche Befehle umfasst, bei denen das Terminal Befehle (mit oder ohne Daten) zur Karte sendet, um den Befehl auf der Karte bearbeiten zu lassen, um dadurch Antwortdaten auf der Karte bereit zu stellen, die zu einem späteren Zeitpunkt seitens des Terminals explizit und mittels eines separaten Anforderungsbefehls angefordert werden können. Bei dieser Klasse von Befehlen sind die Befehle jeweils stets mit einem zugehörigen Anforderungsbefehl (zum Abholen der Antwortdaten auf den jeweiligen Befehl) gekoppelt.

Bei dieser Klasse von Befehlen wird also durch den Befehl, z. B. mittels des Kommandos SELECT, eine Datenverarbeitung auf der Karte ausgelöst. Die Antwortdaten können über einen speziellen Anforderungsbefehl, z. B. mittels des Kommandos GET RESPONSE, abgeholt werden.

Es gibt jedoch Anwendungen, die jedoch lediglich das Absetzen des jeweiligen Befehls erfordern, ohne dass es erforderlich ist, Antwortdaten abzuholen. Der Anforderungsbefehl unterbleibt in solchen Anwendungen.

Als wesentlicher Nachteil erweist es sich im Stand der Technik bei dem T=0-Protokoll, dass das Terminal nicht signalisieren kann, dass es auf einen bestimmten Befehl keine Antwortdaten wünscht, bzw. dass kein Anforderungsbefehl abgesetzt wird. Die Karte stellt also die Antwortdaten in jedem Fall zur Verfügung, obwohl dies für die spezielle Anwendung nicht notwendig ist. Die Verarbeitungszeit, die notwendig ist, um zusätzlich zur eigentlichen Befehlsaktion die Antwortdaten aufzubereiten, ist mit anderen Worten als "verlorene Zeit" zu betrachten und führt zu deutlichen Performance-Einbußen.

Um den vorstehend erwähnten Performance-Nachteil zu überwinden und um die Befehlsverarbeitung auf der Chipkarte zu optimieren und variabler zu gestalten, hat die vorliegende Erfindung zur Aufgabe, die Befehlsverarbeitung auch für solche Fälle zu verbessern bzw. zu optimieren (in Hinblick auf Verarbeitungszeit und Rechenleistung), bei denen das Terminal keine Antwortdaten abruft, bzw. anfordert.

US-A-5942738 offenbart die Merkmale ein Oberbegriff der Ansprüche 1 und 12.

Diese Aufgabe wird durch die beiliegenden unabhängigen Ansprüche gelöst, insbesondere durch ein Verfahren, einen mobilen Datenträger, ein System und ein Computerprogrammprodukt zum Bearbeiten von Befehlen, die im Rahmen der Kommunikation zwischen einem mobilen Datenträger und einem Kartenleser übertragen werden.

Die Aufgabe wird insbesondere durch ein Verfahren zum Bearbeiten eines Befehls für einen mobilen Datenträger, insbesondere für eine Chipkarte, gelöst, wobei der Befehl über ein standardisiertes Protokoll, vorzugsweise nach dem ISO-7816-Standard, von einem Kartenleser an den mobilen Datenträger übertragen wird und wobei der Befehl ein Generieren von Antwortdaten und/oder ein Senden von Antwortdaten an den Kartenleser seitens des mobilen Datenträgers vorsieht, wobei die Antwortdaten über einen zu einem späteren Zeitpunkt ausgegebenen Anforderungsbefehl von dem Kartenleser angefordert werden, mit folgenden Verfahrensschritten:
- Erfassen des Befehls seitens des mobilen Datenträgers;
- Generieren und Senden einer Antwort an den Kartenleser, wobei die Antwort nur aus einem Bestätigungscode besteht, der anzeigt, dass die Antwortdaten auf dem mobilen Datenträger abrufbar sind;
- Bestimmen, ob der Kartenleser die abrufbaren Antwortdaten mit einem Anforderungsbefehl anfordert und bejahendenfalls:
- Generieren der Antwortdaten zu dem Befehl auf dem mobilen Datenträger und Senden der Antwortdaten an den Kartenleser, wobei das Generieren der Antwortdaten erst nach Absetzen des Anforderungsbefehls seitens des Kartenlesers oder nach Erhalt des Anforderungsbefehls seitens des mobilen Datenträgers begonnen oder ausgeführt wird.

Zur Klarstellung ist zu sagen, daß unter dem Generieren von Antwortdaten auch das dazu notwendige Ausführen des seitens des Datenträgers erfassten Befehls zu verstehen ist.

Im Folgenden werden die Begrifflichkeiten von Merkmalen der erfindungsgemäßen Lösung näher erläutert.

Bei dem mobilen Datenträger handelt sich es sich üblicherweise um eine Chipkarte. Die Chipkarte kann als Smartcard, SIM-Karte für GSM-Anwendungen oder aber auch als Karte für nicht-mobilfunkbezogene Anwendungen ausgebildet sein. Üblicherweise umfasst die Chipkarte einen integrierten Schaltkreis (Integrated Circuit, IC) und Speicherbausteine. Sie kann auch als Multi-Applikationskarte ausgebildet sein.

Der Kartenleser bzw. die Kartenleseeinrichtung betrifft ein elektronisches Gerät, das ausgelegt ist, um mit der Chipkarte zu kommunizieren. Ebenso kann unter dem Begriff "Kartenleser" ein Terminal subsumiert werden, wobei die erfindungsgemäße Lösung nicht auf eine bestimmte Art von Terminal beschränkt ist und eine mobile Station (mobile station, MS; insbesondere Handy), ein mobiles Gerät (mobile equipment, ME), ein IFD (Interface Device), ein CAD (Chip Accepting Device), ein CCR (Chip Card Reader), einen Smartcard-Reader und einen Smartcard-Adapter umfasst. Des Weiteren kann die vorliegende Erfindung auf tragbare und auf stationäre Terminals angewendet werden.

Bei dem Protokoll handelt es sich in der bevorzugten Ausführungsform um das T=0-Protokoll nach dem ISO-Standard 7816. Alternative Ausführungsformen der Erfindung sehen hier andere Protokolle vor, die ebenfalls nach anderen Normen ausgelegt sein können, wie beispielsweise das T=1-Protokoll, das T=14-Protokoll etc.

Der Befehl (bzw. das Kommando) gehört einer Klasse von Befehlen an, die eine Datenverarbeitung auf dem mobilen Datenträger auslösen können. Bei der Verarbeitung des Befehls auf dem mobilen Datenträger werden Antwortdaten in Bezug auf den jeweiligen Befehl generiert, die mit einem separaten, nachfolgenden Anforderungsbefehl von dem Terminal abgerufen werden müssen. Die Klasse von Befehlen kennzeichnet sich durch Befehle, die es vorsehen, dass die zu dem Befehl gehörigen Antwortdaten mit einem separaten Anforderungsbefehl (zum Anfordern der Antwortdaten) zu einem späteren Zeitpunkt angefordert werden müssen, falls das Terminal die Antwortdaten benötigt. In der bevorzugten Ausführungsform handelt es sich bei dem Befehl um einen Selektionsbefehl für Dateien, insbesondere um den Befehl SELECT und bei dem Anforderungsbefehl um den Befehl GET RESPONSE. Es sind jedoch noch andere Paare von Befehl-Anforderungsbefehl möglich, beispielsweise Such- und/oder Lesebefehle (z. B. SEEK, SEARCH) oder weitere Anforderungsbefehle zum Abholen der Antwortdaten. Weitere Befehle und/oder Anforderungsbefehle sind abhängig von der jeweiligen Anwendung und ergeben sich aus der Norm ISO/IEC 7816-4. Wesentlich ist es, dass der Befehl zwar das Aufbereiten der Antwortdaten auf der Chipkarte auslösen kann, dass diese Antwortdaten jedoch stets mit einem separaten Anforderungsbefehl vom Terminal abgeholt bzw. angefordert werden müssen. Es ist nicht vorgesehen, die Antwortdaten bereits nach Erhalt des Befehls an das Terminal zu senden.

In einer vorteilhaften Ausführungsform basiert das erfindungsgemäße, computerbasierte Verfahren auf der folgenden, zeitlichen Abfolge von Verfahrensschritten:
- Erfassen des Befehls;
- Generieren und Senden einer Antwort an den Kartenleser, ohne dass Antwortdaten auf der Karte generiert bzw. aufbereitet werden;
- Bestimmen, ob zu dem erfassten Befehl ein Anforderungsbefehl ausgegeben worden ist und nur bejahendenfalls:
   - Generieren, Aufbereiten und/ oder Senden der Antwortdaten an den Kartenleser.
   Anderenfalls, falls also kein Anforderungsbefehl ausgegeben worden ist (und somit keine Antwortdaten angefordert sind), werden keine Antwortdaten auf der Chipkarte vorbereitet, aufbereitet oder generiert.

Zur Klarstellung ist zu sagen, daß unter dem Generieren einer Antwort auch das dazu notwendige Ausführen des seitens des Datenträgers erfassten Befehls zu verstehen ist.

Dadurch kann erfindungsgemäß eine deutliche Zeitersparnis erreicht werden, indem die zeitaufwendige Aufbereitung von Antwortdaten auch nur dann ausgeführt wird, wenn dies notwendig ist (wenn also Antwortdaten vom Terminal angefordert werden).

Das Erfassen des Befehls erfolgt durch das Verarbeiten der jeweiligen Kommando-APDU-Einheit auf dem mobilen Datenträger. Das Generieren und Senden einer Antwort wird auf der Karte ausgeführt, wobei die Antwort nur ein Bestätigungssignal gemäß dem vordefinierten Format der Antwort-APDU (Response APDU) ist und neben dem zwingenden "Trailer" (umfassend Statuswörter 1 und 2; SW1, SW2) zusätzlich die Länge der erwarteten Antwortdaten umfasst. Die Antwort enthält keine Antwortdaten bzw. Response-Daten, weil diese erfindungsgemäß erst ereignisabhängig (nämlich abhängig von der Existenz eines Anforderungsbefehls) zu einem späteren Zeitpunkt aufbereitet bzw. generiert werden.

Um zu bestimmen, ob der Kartenleser die abrufbaren Antwortdaten anfordert, wird erfindungsgemäß der unmittelbar oder mittelbar auf dem jeweiligen Befehl folgende weitere Befehl ausgewertet und es wird analysiert, ob es sich bei dem weiteren Befehl um einen Anforderungsbefehl zu dem Befehl handelt.

In einer vorteilhaften alternativen Ausführungsform werden mehrere nachfolgende weitere Befehle analysiert, ob sie einen Anforderungsbefehl in Bezug auf den jeweiligen Befehl enthalten. Zwischen dem Befehl und einem Anforderungsbefehl können somit anderweitige Daten ausgetauscht werden. Das Bestimmen basiert somit auf einer Fallunterscheidung.

Das Generieren der Antwortdaten umfasst grundsätzlich alle Arten der Datenverarbeitung und kann ein binäres Signal (JA oder NEIN) betreffen. Ebenso ist es möglich, dass die Antwortdaten vor- oder aufbereitet werden. Die Form der Aufbereitung ist abhängig von dem jeweiligen Befehl.

Gemäß einem weiteren Aspekt der Erfindung ist es vorgesehen, dass das Generieren der Antwortdaten erst dann ausgeführt wird, wenn der Anforderungsbefehl seitens des mobilen Datenträgers erhalten bzw. empfangen wurde. Es ist jedoch auch möglich, das Generieren der Antwortdaten von dem Absetzen des Anforderungsbefehls seitens des Terminals abhängig zu machen. Im ersten Fall erfolgt das Bestimmen (ob der Kartenleser die Antwortdaten anfordert) auf der Seite des Datenträgers, indem der Empfang des Anforderungsbefehls analysiert wird. Im zweiten Fall erfolgt das Bestimmen auf der Seite des Terminals, indem analysiert wird, ob das Terminal den Anforderungsbefehl gesendet bzw. abgesetzt hat.

In einer bevorzugten Ausführungsform ist es vorgesehen, dass das Generieren der Antwortdaten erst dann ausgeführt wird, wenn der Verfahrensschritt des Bestimmens erfolgreichen abgeschlossen ist. In einer alternativen Ausführungsform ist es auch möglich, dass das Generieren der Antwortdaten erst begonnen wird, wenn das Bestimmen erfolgreich ausgeführt worden ist. Der zweite Fall bezieht sich also auf ein streng sequenzielles Vorgehen, während der erste Fall auch eine parallele Datenverarbeitung (Generieren der Antwortdaten) auf der Chipkarte vorsieht.

Nachstehend wird die Erfindung anhand der verfahrensgemäßen Lösung beschrieben. Hierbei erwähnte Merkmale, alternative Ausführungsformen und/ oder Vorteile sind ebenso auch auf die anderen Lösungen der Aufgabe, insbesondere auf den mobilen Datenträger, auf das Produkt, das Medium und/oder auf das System anzuwenden und umgekehrt. Mit anderen Worten können der mobile Datenträger, das Produkt, das Medium und/oder das System ebenso mit den Merkmalen weitergebildet sein, die in Zusammenhang mit dem Verfahren beschrieben oder beansprucht worden sind. Hierbei werden die jeweiligen funktionalen Merkmale des Verfahrens durch entsprechende Hardware-und/oder Software-Module ausgebildet, die dazu bestimmt sind, die jeweilige Funktion auszuführen.

Gemäß einer bevorzugten Ausführungsform werden der Befehl, der Anforderungsbefehl, die Antwort und die Antwortdaten über eine jeweils separat gekapselte Kommunikationseinheit übertragen. Auf einer Anwendungsschicht des ISO/OSI-Schichtenmodells sind dies die APDU-Kommunikationseinheiten, die Befehls-APDU's und Antwort-APDU's umfassen. Auf einer Leitungsschicht des ISO/OSI-Schichtenmodells sind dies die TPDU-Kommunikationseinheiten.

Der Bestätigungs-Code, der als Antwort auf den Befehl von der Chipkarte an das Terminal gesendet wird, zeigt an, dass die Antwortdaten auf dem mobilen Datenträger abrufbar sind. Der Bestätigungs-Code umfasst keine Antwortdaten. Der Bestätigungs-Code ist vielmehr ein Signal mit einer binären Information (vorhanden oder nicht vorhanden). In einer bevorzugten Ausführungsform umfasst der Bestätigungs-Code einen Return-Code, der die Länge der erwarteten Antwortdaten angibt. Bezogen auf das T=0-Protokoll wird hierfür ein spezielles Statuswort SW1SW2 (z.B. 9FXX, wobei XX für die Länge der abrufbaren Daten steht) verwendet.

Eine vorteilhafte Weiterbildung des erfindungsgemäßen Verfahrens besteht darin, auch einen Fehlerfall abzudecken und dies dem Terminal zu signalisieren. Ein Fehlerfall kann beispielsweise darin bestehen, dass die Antwortdaten auf den Befehl nicht abrufbar sind oder dass eine anderweitige Störung der Kommunikation zwischen Kartenleser und Chipkarte stattgefunden hat, so dass Daten und/oder Befehle nicht oder nicht vollständig übertragen worden sind. In diesem Zusammenhang kann die Antwort einen Fehler-Code umfassen, der dem Terminal den Fehlerfall signalisiert, falls die Antwortdaten nicht abrufbar sind oder falls ein vorangegangener Befehl nicht ausgeführt werden kann oder konnte.

Ein hauptsächliches Anwendungsfeld für das erfindungsgemäße Verfahren sind der Befehl "SELECT" und der Anforderungsbefehl "GET RESPONSE". Alternativ sind hier jedoch auch alle anderen Befehl-Antwortbefehl-Paare denkbar, bei denen ein Befehl einen Anforderungsbefehl benötigt, der zum Abholen der Daten des Befehls bestimmt ist.

Gemäß einer bevorzugten Ausführungsform wird das Verfahren für eine SIM-Karte in einem mobilen Endgerät verwendet, insbesondere beim Hochfahren des mobilen Endgerätes, da hierbei erfindungsgemäß eine maximale Zeitersparnis durch Vermeiden von unnötigen Befehlsverarbeitungen auf der Karte erzielt werden kann.

Eine weitere Aufgabenlösung besteht in einem mobilen Datenträger mit einer Prozessoreinheit und mit einem Programm-Code, der zum Ausführen in dem mobilen Datenträger und/oder in dem Kartenleser bestimmt ist und in dem das Verfahren, wie vorstehend beschrieben, implementiert ist.

Eine weitere Aufgabenlösung liegt in einem System zum Bearbeiten eines Befehls, mit:
- zumindest einem mobilen Datenträger,
- zumindest einem Kartenleser, der einen Befehl an den mobilen Datenträger sendet, wobei der Befehl über ein standardisiertes Protokoll übertragen wird, und ein Generieren von Antwortdaten seitens des mobilen Datenträgers vorsieht, wobei die Antwortdaten über einen separaten Anforderungsbefehl von dem Kartenleser angefordert werden;
- zumindest einer Schnittstelle zur Kommunikation zwischen dem mobilen Datenträger und dem Kartenleser, die ausgelegt ist, um einen Befehl und gegebenenfalls einen separaten Antwortbefehl von dem Kartenleser an den mobilen Datenträger zu senden, und die ausgelegt ist, um eine Antwort und gegebenenfalls Antwortdaten von dem mobilen Datenträger an den Kartenleser zu senden; wobei der mobile Datenträger folgendes umfasst:
- zumindest ein Erfassungsmodul, das zum Erfassen des Befehls seitens des mobilen Datenträgers bestimmt ist;
   - zumindest einen Antwortgenerator, der zum Generieren und Senden einer Antwort an den Kartenleser bestimmt ist, wobei die Antwort nur aus einem Bestätigungs-Code besteht, der anzeigt, dass die Antwortdaten auf dem mobilen Datenträger abrufbar sind;
   - zumindest ein Bestimmungsmodul, das ausgelegt ist, zu bestimmen, ob der Kartenleser die abrufbaren Antwortdaten mit einem nachfolgenden Anforderungsbefehl anfordert;
   - zumindest einen Antwortdatengenerator, der dazu bestimmt ist, Antwortdaten zu dem Befehl auf dem mobilen Datenträger zu generieren und die Antwortdaten an den Kartenleser zu senden, wobei der Antwortdatengenerator die Antwortdaten erst dann generiert, nachdem das Bestimmungsmodul die Existenz eines Anforderungsbefehls bestimmt hat.

Die vorstehend beschriebenen, erfindungsgemäßen Ausführungsformen des Verfahrens können auch als Computerprogrammprodukt ausgebildet sein, wobei ein Computer oder ein programmierbares Gerät zur Durchführung des oben beschriebenen, erfindungsgemäßen Verfahrens veranlasst wird und dessen Programmcode durch einen Prozessor ausgeführt wird, wenn der Programmcode in dem Computer oder in dem programmierbaren Gerät geladen wird.

Eine alternative Aufgabenlösung sieht ein Speichermedium vor, das zur Speicherung des vorstehend beschriebenen, computer-implementierten Verfahrens bestimmt ist und von einem Computer oder von einem programmierbaren Gerät, insbesondere von einem Kartenleser oder von einem mobilen Datenträger, lesbar ist.

Weitere vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- Fig. 1a: eine übersichtsartige Darstellung von Kommunikationseinheiten, die zwischen einer Chipkarte und einem Kartenleser übertragen werden und
- Fig.1b: eine übersichtsartige Darstellung von Kommunikationseinheiten, die zwischen Chipkarte und einem Kartenleser übertragen werden, falls keine Antwortdaten seitens des Kartenlesers angefordert werden und
- Fig. 2: eine schematische Darstellung von übertragenen Kommunikationseinheiten zwischen Chipkarte und einem Kartenleser mit zugehörigen Modulen.

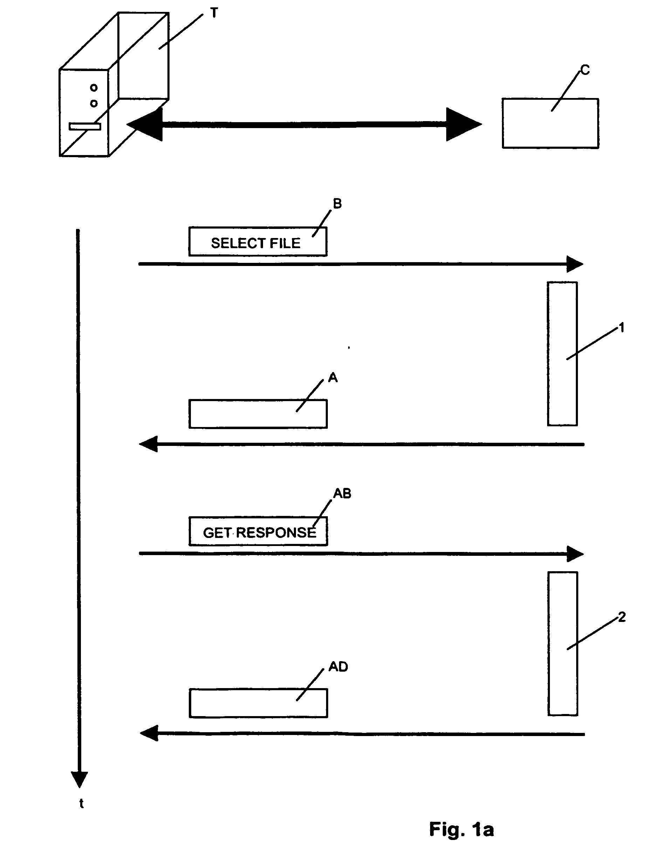

Wie in einem oberen Teil der Fig.1a dargestellt, betrifft die erfindungsgemäße Lösung die Befehlsverarbeitung auf einer Chipkarte C, wobei ein Befehl B von einem Kartenleser bzw. von einem Terminal T an die Chipkarte C gesendet wird. Dabei wird ein standardisiertes Protokoll, insbesondere nach dem ISO7816-Standard verwendet. Grundsätzlich wird der Befehl B immer von dem Terminal T an die Chipkarte gesendet, und gegebenenfalls auf der Chipkarte C bearbeitet. Die Chipkarte C arbeitet somit als so genannter Slave, während das Terminal T als Master fungiert und jegliche Kommunikation initiiert.

Im unteren Teil der Fig. 1a ist ein zeitlicher Verlauf eines erfindungsgemäßen Verfahrens zum Bearbeiten des Befehls B dargestellt.

Dabei wird der Befehl B -in diesem Fall handelt es sich um den Befehl "SELECT" - von dem Terminal T an die Chipkarte C übertragen. Erfindungsgemäß erfolgt nun zusätzlich zum eigentlichen Selektieren der Datei das Generieren und Senden (dies ist mit dem Bezugszeichen 1 gekennzeichnet) einer Antwort A, d.h. eines Statuswortes ohne Antwortdaten, an das Terminal T.

In einer bevorzugten Ausführungsform wird bei diesem Schritt lediglich die Länge der Antwortdaten (XX) ermittelt. Vorteilhafterweise werden zu diesem Zeitpunkt jedoch keine Antwortdaten AD aufbereitet. Es wird also lediglich eine Antwort A von der Chipkarte C an das Terminal T gesendet, die angibt, dass die Antwortdaten AD vorliegen. Dies erfolgt vorzugsweise durch Senden von folgenden Statuswörtern: "SW1 SW2 = 9FXX".

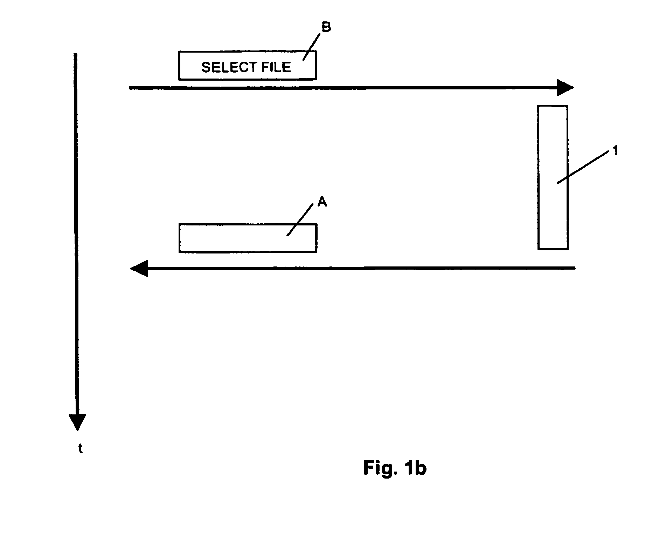

Der weitere Verlauf des erfindungsgemäßen Verfahrens ist nun abhängig von Ereignissen, die seitens des Terminals T ausgelöst werden bzw. von den weiteren Befehlen, die vom Terminal T an die Chipkarte C gesendet werden. In Fig. 1a ist der Fall gezeigt, bei dem das Terminal T auch Antwortdaten AD auf den Befehl B hin anfordert. In Fig. 1b ist hingegen der Fall dargestellt, bei dem das Terminal T nach dem Senden des Befehls B keinen weiteren Anforderungsbefehl AB absetzt und somit keine Antwortdaten AD benötigt. Wie aus Fig. 1b ersichtlich, hört dann zu diesem Zeitpunkt das erfindungsgemäße Verfahren auf, ohne dass explizit Antwortdaten AD seitens der Chipkarte C generiert worden sind. Wie in Fig.1b dargestellt, ist lediglich eine Antwort A in Schritt 1 generiert und an das Terminal T zurückgesendet worden.

Anderenfalls, falls also das Terminal T die Antwortdaten AD auch anfordert, so ist es vorgesehen, dass das Terminal T einen Anforderungsbefehl AB an die Chipkarte C sendet. Üblicherweise handelt es sich bei diesem Anforderungsbefehl um das Kommando "GET RESPONSE". Alternativ sind hier auch andere Anforderungskommandos möglich. Erst auf dieses Ereignis hin, also nachdem das Terminal T den Anforderungsbefehl "GET RESPONSE" AB an die Chipkarte C abgesetzt hat, werden die Antwortdaten AD in Schritt 2 generiert und an das Terminal T zurückgesendet.

Im Unterschied dazu erfolgt das Generieren der Antwortdaten AD nicht, falls das Terminal T keine solche Antwortdaten AD erfordert. Dieser Fall ist, wie bereits erwähnt, in Fig. 1b dargestellt. Hier wird ersichtlich, dass die Verarbeitungszeit auf der Chipkarte C in diesem Fall deutlich reduziert werden kann.

Das hauptsächliche Anwendungsgebiet der erfindungsgemäßen Lösung liegt auf dem Gebiet der Mobilfunktechnik, so dass das Terminal T ein mobiles Endgerät (z.B. ein Handy, im Folgenden Mobile genannt) ist, das mit einer SIM-Karte C kommuniziert und - insbesondere beim Hochfahren des Endgerätes - einen "SELECT"-Befehl B (XX XX FID) an die SIM-Karte C schickt, beispielsweise in der Form:
Mobile → A0 A4 00 00 02 XX XX → Karte.

Das jeweilige File wird auf den Befehl B selektiert. Die Antwortdaten AD für den SELECT-Befehl B werden zu diesem Zeitpunkt nicht berechnet. Es wird lediglich die Länge der verfügbaren Antwortdaten AD ermittelt und als Statuswort zurückgegeben (YY Länge der verfügbaren Response-Daten):
Mobile ← 9F YY <- Karte.

Wie vorstehend bereits erwähnt, unterscheidet sich nun das nachfolgende Verfahren abhängig von einem weiteren Anforderungsbefehl AB seitens des Mobiles. Falls das folgende Kommando ein "GET RESPONSE"-Anforderungsbefehl ist, werden die Antwortdaten AD berechnet und zurückgeschickt:
Mobile → A0 C0 00 00 YY → Karte
Mobile ← [YY Bytes] 90 00 ← Karte

Wenn das dem SELECT Befehl folgende Kommando kein GET RESPONSE-Anforderungsbefehl AB ist, wird die Möglichkeit, die Response-Daten abzurufen, verworfen.

Der Ablauf stimmt also mit dem grundsätzlichen Ablauf aus dem Stand der Technik überein; er unterscheidet sich lediglich im Zeitpunkt der Berechnung der Response-Daten. Bisher wurden diese Response-Daten bereits stets beim Empfang eines Befehls B (z. B. SELECT) berechnet. Falls anschließend kein GET RESPONSE geschickt wurde, war diese Berechnung überflüssig. Erfindungsgemäß kann diese unnötige Berechnungszeit nun vollständig eingespart werden.

Um zu unterscheiden, ob auf einen Anforderungsbefehl AB hin Antwortdaten von der Karte gesendet werden können, wird erfindungsgemäß ein Zustand intern in der Karte gespeichert, der anzeigt, dass Antwortdaten AD abrufbar sind ("XX-Byte Antwortdaten abrufbar").

Dieser Zustand zeigt an, dass Antwortdaten AD abrufbar sind. Mit anderen Worten ist es nicht notwendig, dass ein Anforderungsbefehl AB unmittelbar nach dem Senden eines Befehls B ausgegeben wird. Es ist auch möglich, dass der Anforderungsbefehl AB erst zu einem späteren Zeitpunkt nach weiteren Befehlen B gesendet wird. So lange besteht der Zustand "Antwortdaten abrufbar", der jeweils auf einen spezifischen Befehl B bezogen ist. Wenn das Terminal T im weiteren Verlauf die Antwortdaten AD mittels des Anforderungsbefehls GET RESPONSE anfordert, werden diese - sofern sich die Karte C in dem entsprechenden besonderen Zustand befindet - "Just in Time" aufbereitet und an das Terminal T gesendet. Ein unnötiges Aufbereiten von Antwortdaten AD unterbleibt somit.

Wird die erfindungsgemäße Lösung konkret auf die Hochlaufphase der SIM-Karte beim Einschalten des Handys angewendet, so hat das Handy üblicherweise kein Interesse an den von der SIM-Karte C nach dem Stand der Technik bereitgestellten FCI-Daten (File-Control-Information-Daten). Erfindungsgemäß wird deshalb in diesem Fall kein nachfolgender GET RESPONSE-Anforderungsbefehl abgesetzt. Somit kann die Zeit für die Aufbereitung der FCI-Daten eingespart werden. Dies beträgt typischerweise 10 bis 80 ms pro Datei.

Die spezielle Ausführungsform betrifft den SELECT-Befehl. Der SELECT-Befehl ist ein case4-Kommando und umfasst neben Eingangsdaten auch Ausgangsdaten. Andere Anwendungen der erfindungsgemäßen Lösung können auch andere case4-Kommandos betreffen.

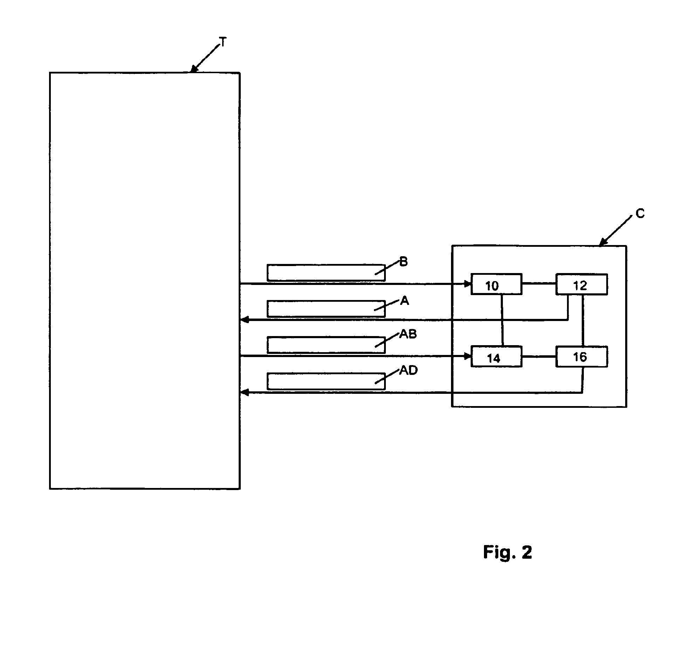

Eine weitere Aufgabenlösung besteht in einem System zum Bearbeiten des Befehls B anhand des vorstehend beschriebenen Verfahrens. Das System umfasst den Kartenleser T, eine Schnittstelle zur Kommunikation zwischen einer Chipkarte C und dem Kartenleser T und ein Erfassungsmodul 10, einen Antwortgenerator 12, ein Bestimmungsmodul 14 und einen Antwortdatengenerator 16, wobei alle Module und Generatoren innerhalb der Chipkarte C ausgebildet sind. Das System mit dem erfindungsgemäßen Datenaustausch ist in Fig. 2 dargestellt.

Eine andere Lösung der erfindungsgemäßen Aufgabe ist in einem Computerprogrammprodukt zu sehen, das zum Ausführen des oben beschriebenen erfindungsgemäßen Verfahrens bestimmt ist. Dabei können einzelne Software- und/ oder Hardware-Module des Produktes als separate Module und/oder in das Betriebssystem integriert ausgebildet sein.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Für einen einschlägigen Fachmann ist es insbesondere offensichtlich, dass die Erfindung teilweise oder vollständig in Soft- und/ oder Hardware und/oder auf mehrere physikalische Produkte - dabei insbesondere auch Computerprogrammprodukte - verteilt realisiert werden kann.

## Patentansprüche

1. Verfahren zum Bearbeiten eines Befehls (B) für einen mobilen Datenträger (C), wobei der Befehl über ein standardisiertes Protokoll von einem Kartenleser (T) an den mobilen Datenträger (C) übertragen wird und ein Generieren von Antwortdaten (AD) seitens des mobilen Datenträgers (C) vorsieht, wobei die Antwortdaten (AD) über einen separaten Anforderungsbefehl (AB) von dem Kartenleser (T) angefordert werden, mit folgenden Verfahrensschritten:
- Erfassen des Befehls seitens des mobilen Datenträgers (C);
- Generieren und Senden einer Antwort (A) an den Kartenleser (T), wobei die Antwort (A) einen Bestätigungscode umfasst, der anzeigt, dass die Antwortdaten (AD) auf dem mobilen Datenträger (C) abrufbar sind;
- Bestimmen, ob der Kartenleser (T) die abrufbaren Antwortdaten (AD) mit einem Anforderungsbefehl (AB) anfordert und bejahendenfalls:
**gekennzeichnet durch**
∘ Generieren der Antwortdaten (AD) zu dem erfassten Befehl (B) auf dem mobilen Datenträger (C) und Senden der Antwortdaten (AD) an den Kartenleser, wobei das Generieren der Antwortdaten (AD) erst nach Erhalt des Anforderungsbefehls (AB) seitens des mobilen Datenträgers ausgeführt wird.

2. Verfahren nach Anspruch 1, **dadurch gekennzeichnet, dass** die Antwort (A) keine Antwortdaten (AD) enthält.

3. Verfahren nach Anspruch 1 oder 2, **dadurch gekennzeichnet, dass** der Befehl (B) einen separaten, nachfolgenden Anforderungsbefehl (AB) erfordert und an diesen insofern gekoppelt ist, um die Antwortdaten (AD) zu dem Befehl von dem mobilen Datenträger (C) anzufordern.

4. Verfahren nach zumindest einem der vorhergehenden Ansprüche, **dadurch gekennzeichnet, dass** der Befehl (B) ein Selektionsbefehl für Dateien, insbesondere ein SELECT Befehl, ein Such- oder ein Lesebefehl ist.

5. Verfahren nach zumindest einem der vorhergehenden Ansprüche, **dadurch gekennzeichnet, dass** der mobile Datenträger (C) die Antwortdaten (AD) erst zu einem Zeitpunkt generiert, nachdem der Kartenleser (T) den Anforderungsbefehl (AB) abgesetzt oder nachdem der mobile Datenträger (C) den Anforderungsbefehl (AB) des Kartenlesers (T) erfasst hat.

6. Verfahren nach zumindest einem der vorhergehenden Ansprüche, **dadurch gekennzeichnet, dass** der Befehl (B), der Anforderungsbefehl(AB), die Antwort (A )und/oder die Antwortdaten (AD) über eine gekapselte Kommunikationseinheit zwischen Kartenleser (T) und dem mobilen Datenträger (C) übertragen werden.

7. Verfahren nach zumindest einem der vorhergehenden Ansprüche, **dadurch gekennzeichnet, dass** das Protokoll ein T=0-Protokoll ist.

8. Verfahren nach zumindest einem der vorhergehenden Ansprüche, **dadurch gekennzeichnet, dass** der Bestätigungscode einen Returncode umfasst, der die Länge der erwarteten Antwortdaten (AD) angibt.

9. Verfahren nach zumindest einem der vorhergehenden Ansprüche, **dadurch gekennzeichnet, dass** die Antwort (A) einen Fehlercode umfasst, falls die Antwortdaten (AD) nicht abrufbar sind oder falls der Befehl (B) nicht ausgeführt werden kann.

10. Verfahren nach zumindest einem der vorhergehenden Ansprüche, **dadurch gekennzeichnet, dass** ein Abrufzustand erfasst wird, der darauf hinweist, dass auf dem mobilen Datenträger (C) Antwortdaten (AD) zu einem Befehl (B) abrufbar sind und in dem sich der mobile Datenträger (C) nach dem Senden des Befehls (B) solange befindet, bis die Antwortdaten (AD) an den Kartenleser (T) gesendet worden sind oder bis ein weiterer Befehl (B) an den mobilen Datenträger (C) gesendet wird.

11. Mobiler Datenträger (C) mit einer Prozessoreinheit und mit einem Speicher zum Speichern von Programm-Code, **gekennzeichnet dadurch, dass**
der mobile Datenträger (C) zum Ausführen eines Verfahrens nach zumindest einem der Ansprüche 1 mit 10 zwischen dem mobilen Datenträger (C) und einem Kartenleser (T) ausgebildet ist.

12. System zum Bearbeiten eines Befehls, mit:
- zumindest einem mobilen Datenträger (C),
- zumindest einem Kartenleser (T), der einen Befehl an den mobilen Datenträger (C) sendet, wobei der Befehl über ein standardisiertes Protokoll übertragen wird, und ein Generieren von Antwortdaten (AD) seitens des mobilen Datenträgers (C) vorsieht, wobei die Antwortdaten (AD) über einen separaten Anforderungsbefehl (AB) von dem Kartenleser (T) angefordert werden;
- zumindest einer Schnittstelle zur Kommunikation zwischen dem mobilen Datenträger (C) und dem Kartenleser (T), die ausgelegt ist, um einen Befehl (B) und gegebenenfalls einen separaten Antwortbefehl (AB) von dem Kartenleser (T) an den mobilen Datenträger (C) zu senden, und ausgelegt ist, um eine Antwort (A) und gegebenenfalls Antwortdaten (AD) von dem mobilen Datenträger (C) an den Kartenleser (T) zu senden; wobei der mobile Datenträger (C) folgendes umfasst:
- zumindest ein Erfassungsmodul (10), das zum Erfassen des Befehls seitens des mobilen Datenträgers (C) bestimmt ist;
- zumindest einen Antwortgenerator (12), der zum Generieren und Senden einer Antwort (A) an den Kartenleser (T) bestimmt ist, wobei die Antwort (A) einen Bestätigungs-Code umfasst, der anzeigt, dass die Antwortdaten (AD) auf dem mobilen Datenträger abrufbar sind;
- zumindest ein Bestimmungsmodul (14), das ausgelegt ist, zu bestimmen, ob der Kartenleser (T) die abrufbaren Antwortdaten (AD) mit einem nachfolgenden Anforderungsbefehl (AB) anfordert;
**gekennzeichnet durch**
- zumindest einen Antwortdatengenerator (16), der dazu bestimmt ist, Antwortdaten (AD) zu dem Befehl auf dem mobilen Datenträger (C) zu generieren und die Antwortdaten (AD) an den Kartenleser (T) zu senden, wobei der Antwortdatengenerator (16) die Antwortdaten (AD) erst dann generiert, nachdem das Bestimmungsmodul (14) die Existenz eines Anforderungsbefehls (AB) bestimmt hat.

13. Computerprogrammprodukt, das in einen Speicher eines programmierbaren Gerätes (T, C) geladen werden kann und Computerprogrammcode-Abschnitte umfasst, **gekennzeichnet dadurch, dass** die Computerprogrammcode-Abschnitte dazu bestimmt sind, Schritte eines Verfahrens nach zumindest einem der Patentansprüche 1 bis 10 auszuführen, wenn das Computerprogrammprodukt in dem programmierbaren Gerät (T, C) geladen wird.

## Claims

1. A method for processing a command (B) for a mobile data carrier (C), with the command being transferred from a card reader (T) to the mobile data carrier (C) via a standardized protocol and providing for a generating of response data (AD) on the part of the mobile data carrier (C), with the response data (AD) being requested by the card reader (T) via a separate request command (AB), having the following method steps:
- sensing the command on the part of the mobile data carrier (C);
- generating and sending a response (A) to the card reader (T), with the response (A) comprising a confirmation code which indicates that the response data (AD) are retrievable on the mobile data carrier (C);
- determining whether the card reader (T) requests the retrievable response data (AD) with a request command (AB), and in the case of affirmation:
**characterized by**
- generating the response data (AD) for the sensed command (B) on the mobile data carrier (C) and sending the response data (AD) to the card reader, with the generating of the response data (AD) being executed only after reception of the request command (AB) on the part of the mobile data carrier.

2. The method according to claim 1, **characterized in that** the response (A) contains no response data (AD).

3. The method according to claim 1 or 2, **characterized in that** the command (B) requires a separate, subsequent request command (AB) and is coupled thereto in this respect in order to request the response data (AD) for the command from the mobile data carrier (C).

4. The method according to at least one of the preceding claims, **characterized in that** the command (B) is a selection command for files, in particular a SELECT command, a search command or a read command.

5. The method according to at least one of the preceding claims, **characterized in that** the mobile data carrier (C) generates the response data (AD) only at a time after the card reader (T) has output the request command (AB) or after the mobile data carrier (C) has sensed the request command (AB) of the card reader (T).

6. The method according to at least one of the preceding claims, **characterized in that** the command (B), the request command (AB), the response (A) and/or the response data (AD) are transferred between card reader (T) and the mobile data carrier (C) via an encapsulated communication unit.

7. The method according to at least one of the preceding claims, **characterized in that** the protocol is a T=0 protocol.

8. The method according to at least one of the preceding claims, **characterized in that** the confirmation code comprises a return code which states the length of the expected response data (AD).

9. The method according to at least one of the preceding claims, **characterized in that** the response (A) comprises an error code if the response data (AD) are not retrievable or if the command (B) cannot be executed.

10. The method according to at least one of the preceding claims, **characterized in that** a retrieval state is sensed which indicates that response data (AD) for a command (B) are retrievable on the mobile data carrier (C) and in which the mobile data carrier (C) is located after the sending of the command (B) until the response data (AD) have been sent to the card reader (T) or until a further command (B) is sent to the mobile data carrier (C).

11. A mobile data carrier (C) having a processing unit and having a memory for storing program code, **characterized in that**
the mobile data carrier (C) is configured for executing a method according to at least one of claims 1 with 10 between the mobile data carrier (C) and a card reader (T).

12. A system for processing a command, having:
- at least one mobile data carrier (C),
- at least one card reader (T) which sends a command to the mobile data carrier (C), with the command being transferred via a standardized protocol and providing for a generating of response data (AD) on the part of the mobile data carrier (C), with the response data (AD) being requested by the card reader (T) via a separate request command (AB);
- at least one interface for communication between the mobile data carrier (C) and the card reader (T) which is designed for sending a command (B) and, where applicable, a separate response command (AB) from the card reader (T) to the mobile data carrier (C), and is designed for sending a response (A) and, where applicable, response data (AD) from the mobile data carrier (C) to the card reader (T), with the mobile data carrier (C) comprising the following:
- at least one sensing module (10) which is intended for sensing the command on the part of the mobile data carrier (C);
- at least one response generator (12) which is intended for generating and sending a response (A) to the card reader (T), with the response (A) comprising a confirmation code which indicates that the response data (AD) are retrievable on the mobile data carrier;
- at least one determining module (14) which is designed for determining whether the card reader (T) requests the retrievable response data (AD) with a subsequent request command (AB);
**characterized by**
- at least one response data generator (16) which is intended for generating response data (AD) for the command on the mobile data carrier (C) and for sending the response data (AD) to the card reader (T), with the response data generator (16) generating the response data (AD) only after the determining module (14) has determined the existence of a request command (AB).

13. A computer program product which can be loaded into a memory of a programmable device (T, C) and comprises computer program code portions, **characterized in that** the computer program code portions are intended for executing steps of a method according to at least one of claims 1 to 10 when the computer program product is loaded in the programmable device (T, C).

## Revendications

1. Procédé de traitement d'une instruction (B) pour un support de données (C) mobile, l'instruction étant transmise par le biais d'un protocole standardisé d'un lecteur de carte (T) au support de données (C) mobile et prévoyant une génération de données de réponse (AD) par le support de données (C) mobile, les données de réponse (AD) étant, par le biais d'une instruction de sollicitation (AB) distincte, sollicitées de la part du lecteur de carte (T), comprenant les étapes de procédé suivantes :
- saisie de l'instruction par le support de données (C) mobile;
- génération et envoi d'une réponse (A) au lecteur de carte (T), la réponse (A) comprenant un code de confirmation qui montre que les données de réponse (AD) sont consultables sur le support de données (C) mobile;
- détermination de si le lecteur de carte (T) consulte par une instruction de sollicitation (AB) les données de réponse (AD) consultables, et si cela est le cas:
**caractérisé par**
- génération, sur le support de données (C) mobile, des données de réponse (AD) à l'instruction (B) saisie et envoi des données de réponse (AD) au lecteur de carte, la génération des données de réponse (AD) n'étant exécutée qu'après la réception de l'instruction de sollicitation (AB) par le support de données mobile.

2. Procédé selon la revendication 1, **caractérisé en ce que** la réponse (A) ne comporte pas de données de réponse (AD).

3. Procédé selon la revendication 1 ou 2, **caractérisé en ce que** l'instruction (B) nécessite une instruction de sollicitation (AB) distincte subséquente et est couplé de la sorte à cette dernière pour solliciter les données de réponse (AD) relatives à l'instruction du support de données (C) mobile.

4. Procédé selon au moins une des revendications précédentes, **caractérisé en ce que** l'instruction (B) est une instruction de sélection pour des fichiers, en particulier une instruction SELECT, une instruction de recherche ou de lecture.

5. Procédé selon au moins une des revendications précédentes, **caractérisé en ce que** le support de données (C) mobile ne génère les données de réponse (AD) qu'à un moment où le lecteur de carte (T) a déjà émis l'instruction de sollicitation (AB) ou bien le support de données (C) mobile a déjà saisi l'instruction de sollicitation (AB) de la part du lecteur de carte (T).

6. Procédé selon au moins une des revendications précédentes, **caractérisé en ce que** l'instruction (B), l'instruction de sollicitation (AB), la réponse (A) et/ou les données de réponse (AD) sont transmises par le biais d'une unité de communication blindée entre le lecteur de carte (T) et le support de données (C) mobile.

7. Procédé selon au moins une des revendications précédentes, **caractérisé en ce que** le protocole est un protocole T=0.

8. Procédé selon au moins une des revendications précédentes, **caractérisé en ce que** le code de confirmation comprend un code de retour qui indique la longueur des données de réponse (AD) attendues.

9. Procédé selon au moins une des revendications précédentes, **caractérisé en ce que** la réponse (A) comprend un code d'erreur si les données de réponse (AD) ne sont pas consultables ou si l'instruction (B) ne peut pas être exécutée.

10. Procédé selon au moins une des revendications précédentes, **caractérisé en ce qu'**un état de consultation est saisi, lequel signale que, sur le support de données (C) mobile, des données de réponse (AD) à une instruction (B) sont consultables, et dans lequel se trouve le support de données (C) mobile après l'envoi de l'instruction (B) jusqu'à ce que les données de réponse (AD) aient été envoyées au lecteur de carte (T) ou jusqu'à ce qu'une instruction (B) supplémentaire soit envoyée au support de données (C) mobile.

11. Support de données (C) mobile ayant une unité de processeur et une mémoire pour la mémorisation de code de programme, **caractérisé en ce que**
le support de données (C) mobile est réalisé pour l'exécution d'un procédé selon au moins une des revendications de 1 à 10 entre le support de données (C) mobile et un lecteur de carte (T).

12. Système de traitement d'une instruction, ayant:
- au moins un support de données (C) mobile,
- au moins un lecteur de carte (T) qui envoie une instruction au support de données (C) mobile, l'instruction étant transmise par le biais d'un protocole standardisé et prévoyant une génération de données de réponse (AD) par le support de données (C) mobile, les données de réponse (AD) étant sollicitées par le lecteur de carte (T) par le biais d'une instruction de sollicitation (AB) distincte;
- au moins une interface pour la communication entre le support de données (C) mobile et le lecteur de carte (T), laquelle est conçue pour envoyer une instruction (B) et le cas échéant une instruction de réponse (AB) distincte du lecteur de carte (T) au support de données (C) mobile, et est conçue pour envoyer une réponse (A) et le cas échéant des données de réponse (AD) du support de données (C) mobile au lecteur de carte (T); le support de données (C) mobile comprenant ce qui suit:
- au moins un module de saisie (10) qui est destiné à la saisie de l'instruction par le support de données (C) mobile ;
- au moins un générateur de réponse (12) qui est destiné à la génération et à l'envoi d'une réponse (A) au lecteur de carte (T), la réponse (A) comprenant un code de confirmation qui montre que les données de réponse (AD) sont consultables sur le support de données mobile;
- au moins un module de détermination (14) qui est conçu pour déterminer si le lecteur de carte (T) sollicite après une instruction de sollicitation (AB) subséquente les données de réponse (AD) consultables;
**caractérisé par**
- au moins un générateur de données de réponse (16) qui est destiné à générer sur le support de données (C) mobile des données de réponse (AD) à l'instruction et à envoyer les données de réponse (AD) au lecteur de carte (T), le générateur de données de réponse (16) ne générant les données de réponse (AD) qu'après que le module de détermination (14) a déterminé l'existence d'une instruction de sollicitation (AB).

13. Produit programme d'ordinateur qui peut être chargé dans une mémoire d'un appareil (T, C) programmable et comprend des sections de code de programme d'ordinateur, **caractérisé en ce que** les sections de code de programme d'ordinateur sont destinées à exécuter des étapes d'un procédé selon au moins une des revendications du brevet de 1 à 10 quand le produit programme d'ordinateur est chargé dans l'appareil (T, C) programmable.
